# EUROPÄISCHE PATENTANMELDUNG

(11) **EP 4 398 180 A1**
(43) Veröffentlichungstag der Anmeldung: **10.07.2024**
(21) Anmeldenummer: 23150739.3
(22) Anmeldetag: 09.01.2023
(51) Int. Cl.: G06Q 50/06, H02J 7/34

(54) **KOSTENEFFIZIENTER BETRIEB EINER ANLAGE DER STAHLINDUSTRIE UND EINES ELEKTRISCHEN ENERGIESPEICHERS**

(71) Anmelder: Primetals Technologies Germany GmbH, 91058 Erlangen (DE)
(72) Erfinder: Weinzierl, Klaus, 90480 Nürnberg (DE)
(74) Vertreter: Metals@Linz

(57) **Zusammenfassung**

Eine Gesamtanlage umfasst eine elektrische Energie verbrauchende Anlage (1) der Stahlindustrie und einen elektrischen Energiespeicher (9), die beide an ein elektrisches Versorgungsnetz (2) angeschlossen sind. Einer Steuereinrichtung (10) sind ein aktueller Anlagenzustand (ZA) der Anlage (1), ein aktueller Speicherzustand (ZS) des Energiespeichers (9) und für einen Prognosehorizont (PH) ein gewünschter Produktionsplan (PP) der Anlage (1) und Daten (D) bekannt, durch die mindestens ein erwarteter Preis (P) für aus dem Versorgungsnetz (2) bezogene elektrische Energie zumindest als Funktion der Zeit (t) bestimmt ist. Die Steuereinrichtung (10) setzt für den Prognosehorizont (PH) Betriebsweisen (AB, SB) für die Anlage (1) und den Energiespeicher (9) an und ermittelt zugehörige erwartete finale Zustände (ZA', ZS'). Sie variiert die angesetzten Betriebsweisen (AB, SB) und hierauf aufbauend die zugehörigen erwarteten finalen Zustände (ZA', ZS'), so dass die Gesamtkosten (K) für den Betrieb des Gesamtsystems minimiert werden. In die Gesamtkosten (K) gehen die Kosten (K1) für den Bezug elektrischer Energie aus dem Versorgungsnetz (2) und Bewertungen (K2, K3) der erwarteten finalen Zustände (ZA', ZS') ein. Die Steuereinrichtung (10) betreibt zumindest für den Beginn des Prognosehorizonts (PH) die Anlage (1) und den Energiespeicher (9) gemäß der variierten Betriebsweisen (AB, SB).

## Beschreibung

### Gebiet der Technik

Die vorliegende Erfindung geht aus von einem Betriebsverfahren für ein Gesamtsystem, das eine elektrische Energie verbrauchende Anlage der Stahlindustrie und einen elektrischen Energiespeicher umfasst, die beide an ein elektrisches Versorgungsnetz angeschlossen sind.

Die vorliegende Erfindung geht weiterhin aus von einem Steuerprogramm für eine Steuereinrichtung für ein Gesamtsystem, das eine elektrische Energie verbrauchende Anlage der Stahlindustrie und einen elektrischen Energiespeicher umfasst, die beide an ein elektrisches Versorgungsnetz angeschlossen sind, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung das Gesamtsystem steuert.

Die vorliegende Erfindung geht weiterhin aus von einer Steuereinrichtung für ein Gesamtsystem, das eine elektrische Energie verbrauchende Anlage der Stahlindustrie und einen elektrischen Energiespeicher umfasst, die beide an ein elektrisches Versorgungsnetz angeschlossen sind, wobei die Steuereinrichtung mit einem derartigen Steuerprogramm programmiert ist, so dass die Steuereinrichtung bei Abarbeitung des Maschinencodes des Steuerprogramms das Gesamtsystem steuert.

Die vorliegende Erfindung geht weiterhin aus von einem Gesamtsystem,
- wobei das Gesamtsystem eine elektrische Energie verbrauchende Anlage der Stahlindustrie und einen elektrischen Energiespeicher umfasst, die beide an ein elektrisches Versorgungsnetz angeschlossen sind,
- wobei das Gesamtsystem eine derartige Steuereinrichtung umfasst, die bei Abarbeitung des Maschinencodes des Steuerprogramms das Gesamtsystem steuert.

### Stand der Technik

Die genannten Gegenstände sind beispielsweise aus dem Aufsatz "Grüne Energieversorgung der Stahlindustrie", Stahl und Eisen, August 2022, Seiten 22 bis 24 bekannt.

Aus der KR 2019 0136300 A ist ein industrieller Prozess bekannt, dem ein Energiespeicher zugeordnet ist. Der industrielle Prozess kann ein mehr oder minder komplexer technischer Prozess sein, der mehrere aufeinander aufbauende und miteinander zusammenwirkende Teilprozesse umfasst. Der industrielle Prozess weist verschiedene Arten von Lasten auf, nämlich Lasten, die stets mit Energie versorgt werden müssen, Lasten, die abgeschaltet werden können, und Lasten, bei denen der Energieverbrauch einstellbar ist. Es wird der tatsächliche Energieverbrauch der verschiedenen Komponenten der industriellen Anlage bestimmt. Der Betrieb der industriellen Anlage und des Energiespeichers werden derart aufeinander abgestimmt, dass sich minimale Kosten ergeben.

Aus der US 10 354 297 B2 ist eine Anordnung mit einem häuslichen Verbraucher, einem Energieerzeuger und einem Energiespeicher bekannt. Der Betrieb des Energiespeichers kann unter Berücksichtigung eines geplanten Energieverbrauchs des Verbrauchers ermittelt werden. Weiterhin können auch Wetterdaten mit verwertet werden. Auch können Preisinformationen für das Beziehen elektrischer Energie aus einem Versorgungsnetz und für das Einspeisen elektrischer Energie in das Versorgungsnetz berücksichtigt werden.

Aus der TW 201 235 124 A ist bekannt, dass der Energieverbrauch einer Anlage der Stahlindustrie - konkret ist eine Walzstraße genannt - bei bekannter Betriebsweise der Anlage der Stahlindustrie mit guter Genauigkeit vorhergesagt werden kann.

### Zusammenfassung der Erfindung

In der Vergangenheit wurden bei der Ermittlung des Betriebs von Anlagen der Stahlindustrie zwar die hierbei anfallenden Kosten - auch die hierbei anfallenden Energiekosten - berücksichtigt. Die Berücksichtigung erfolgte jedoch nur in dem Sinne, dass der Gesamtbedarf an elektrischer Energie und die dadurch entstehenden Kosten für die elektrische Energie berücksichtigt wurden. Im Zuge der Hinwendung zu regenerativen Energien muss in erheblich stärkerem Ausmaß die Verfügbarkeit elektrischer Energie (einschließlich der zeitlichen Schwankungen der für die elektrische Energie anfallenden Kosten) berücksichtigt werden, da die Verfügbarkeit zukünftig deutlich größeren Schwankungen als in der Vergangenheit unterworfen sein wird.

Übliche Lösungen arbeiten lokal. Einerseits wird versucht, während der Produktion durch intelligente Steuerung der Anlage der Stahlindustrie deren Stromverbrauch so weit wie möglich zu minimieren. Ein eventuell vorhandener Energiespeicher wird oftmals nicht berücksichtigt. Umgekehrt hat ein Betreiber des elektrischen Energiespeichers oftmals keine Kenntnis über den erwarteten künftigen Energiebedarf der Anlage der Stahlindustrie. Er entscheidet über das Laden oder Entladen des elektrischen Energiespeichers anhand von vorhergesagten Schätzwerten für den künftigen Marktpreis für elektrische Energie. Unter Umständen versucht der Betreiber des Energiespeichers noch, eine Prognose für den zukünftigen Betrieb der Anlage der Stahlindustrie mit einzubeziehen. Jedoch erfolgt meist kein Informationsaustausch zwischen dem Betreiber der Anlage der Stahlindustrie und dem Betreiber des elektrischen Energiespeichers, so dass sich für beide Seiten suboptimale Ergebnisse einstellen.

Entscheidend für die effiziente Verwendung des Energiespeichers im Rahmen der vorliegenden Erfindung sind zum einen der - erwartete - zukünftige Strombedarf der Anlage der Stahlindustrie und zum anderen der zukünftige Preis für aus dem Versorgungsnetz bezogene elektrische Energie.

Die Vorgehensweisen des obenstehend genannten Standes der Technik bieten hierfür einen Ansatz. Insbesondere werden der Betrieb des elektrischen Verbrauchers - im Falle des genannten Fachaufsatzes der Anlage der Stahlindustrie - und der elektrische Energiespeicher gemeinsam betrachtet, so dass in dem elektrischen Energiespeicher elektrische Energie gespeichert werden kann, wenn sie in hohem Ausmaß und zu niedrigen Kosten zur Verfügung steht, und zu einem späteren Zeitpunkt, wenn sie nur in geringerem Ausmaß und zu höheren Kosten zur Verfügung steht, wieder aus dem elektrischen Energiespeicher abgerufen werden kann. Dies wird dadurch möglich, dass die Speicherung elektrischer Energie auch in industriellem Maßstab möglich ist.

Die Aufgabe der vorliegenden Erfindung besteht darin, Möglichkeiten zu schaffen, mittels derer ein kosteneffizienter Betrieb eines Gesamtsystems erreicht wird, wobei das Gesamtsystem eine elektrische Energie verbrauchende Anlage der Stahlindustrie und einen elektrischen Energiespeicher umfasst, die beide an ein elektrisches Versorgungsnetz angeschlossen sind.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren der eingangs genannten Art geschaffen, bei dem
- einer das Gesamtsystem steuernden Steuereinrichtung ein aktueller Anlagenzustand der Anlage der Stahlindustrie, ein aktueller Speicherzustand des Energiespeichers und für einen Prognosehorizont ein gewünschter Produktionsplan der Anlage der Stahlindustrie bekannt sind,
- der Steuereinrichtung Daten bekannt sind, durch die für den Prognosehorizont mindestens ein erwarteter Preis für aus dem Versorgungsnetz bezogene elektrische Energie zumindest als Funktion der Zeit bestimmt ist,
- die Steuereinrichtung für den Prognosehorizont eine Anlagenbetriebsweise für die Anlage der Stahlindustrie und eine Speicherbetriebsweise für den elektrischen Energiespeicher ansetzt und für das Ende des Prognosehorizonts unter Verwertung des aktuellen Anlagenzustands und der angesetzten Anlagenbetriebsweise einen erwarteten finalen Anlagenzustand sowie unter Verwertung des aktuellen Speicherzustands und der angesetzten Speicherbetriebsweise einen erwarteten finalen Speicherzustand ermittelt,
- die Steuereinrichtung für den Prognosehorizont die angesetzte Anlagenbetriebsweise und die angesetzte Speicherbetriebsweise und hierauf aufbauend den erwarteten finalen Anlagenzustand und den erwarteten finalen Speicherzustand variiert, so dass die Gesamtkosten für den Betrieb des Gesamtsystems minimiert werden, wobei in die Gesamtkosten die Kosten für den Bezug elektrischer Energie aus dem Versorgungsnetz, eine Bewertung des erwarteten finalen Anlagenzustands und eine Bewertung des erwarteten finalen Speicherzustands eingehen, und
- die Steuereinrichtung zumindest für den Beginn des Prognosehorizonts die Anlage der Stahlindustrie gemäß der variierten Anlagenbetriebsweise und den elektrischen Energiespeicher gemäß der variierten Speicherbetriebsweise betreibt.

Der Anlagenzustand der Anlage der Stahlindustrie beschreibt in dem erforderlichen Ausmaß den Zustand der Anlage der Stahlindustrie. Der Anlagenzustand kann beispielsweise umfassen, welche Materialien sich in welchem Zustand momentan in der Anlage der Stahlindustrie befinden und in welchem Zustand sich Aggregate der Anlage der Stahlindustrie befinden.

Bei einem Lichtbogenofen kann die Formulierung "welche Materialien sich in welchem Zustand momentan in der Anlage der Stahlindustrie befinden" beispielsweise die Menge an in einem Ofengefäß des Lichtbogenofens befindlichem Metall, dessen chemische Zusammensetzung, dessen Temperatur und Phasenzusammensetzung - alternativ die Enthalpie - und den Fortschritt bei Herstellen der Metallschmelze umfassen. Die Formulierung "in welchem Zustand sich Aggregate der Anlage der Stahlindustrie befinden" kann bei einem Lichtbogenofen beispielsweise den Verschleißzustand des Ofengefäßes, einen Verschleißzustand von Elektroden des Lichtbogenofens, eine prinzipiell maximal mögliche Leistung und eine momentan maximal mögliche Leistung umfassen. Die momentan maximal mögliche Leistung kann beispielsweise kleiner als die prinzipiell maximal mögliche Leistung sein, weil bestimmte Elemente der Anlage der Stahlindustrie nicht oder nur unvollständig arbeiten. Ähnliche Aussagen gelten bei einem Pfannenofen.

Bei einer Walzstraße kann die Formulierung "welche Materialien sich in welchem Zustand momentan in der Anlage der Stahlindustrie befinden" beispielsweise bedeuten, welches Material gerade gewalzt wird und welche Materialien sich momentan in einem den Walzgerüsten der Walzstraße vorgeordneten Ofen befinden, gegebenenfalls einschließlich der Reihenfolge der verschiedenen Materialien. Die Materialien können durch ihre Abmessungen, ihre chemische Zusammensetzung und ihre Temperatur und Phasenzusammensetzung - alternativ die Enthalpie - charakterisiert sein. Die Formulierung "in welchem Zustand sich Aggregate der Anlage der Stahlindustrie befinden" kann bei einer Walzstraße beispielsweise den Verschleißzustand von Arbeitswalzen von Walzgerüsten der Walzstraße umfassen.

In ähnlicher Weise beschreibt der Speicherzustand des Energiespeichers in dem erforderlichen Ausmaß den Zustand des elektrischen Energiespeichers. Der Speicherzustand kann beispielsweise umfassen, in welchem Umfang (prozentual und/oder absolut) der Energiespeicher geladen ist und welche Temperatur Speicherzellen des Energiespeichers aufweisen. Weiterhin kann der Speicherzustand auch umfassen, in welchem Verschleißzustand sich der Energiespeicher oder Teile des Energiespeichers befinden. Der Speicherzustand kann weiterhin prinzipiell maximal mögliche und momentan maximal mögliche Betriebsgrößen umfassen, beispielsweise Lade- und Entladeströme.

Der Produktionsplan der Anlage der Stahlindustrie legt fest, welche Endprodukte mittels der Anlage der Stahlindustrie aus welchen Ausgangsmaterialien erzeugt werden sollen und welche Eigenschaften die Endprodukte aufweisen sollen. Gegebenenfalls legt der Produktionsplan auch fest, welche Zwischenprodukte erzeugt werden sollen. Darüber hinaus kann der Produktionsplan gewisse zeitliche Rahmenbedingungen festlegen, beispielsweise bis wann ein bestimmtes Produkt produziert werden soll ("um 18:00 Uhr soll das Produkt X fertig sein") oder zu welchen Zeitpunkten oder in welchen Zeitbereichen bestimmte Schritte bei der Herstellung des jeweiligen Endprodukts oder des jeweiligen Zwischenprodukts vorgenommen werden sollen und/oder in welcher Reihenfolge die einzelnen Endprodukte hergestellt werden sollen. Der Produktionsplan kann auch festlegen, welche Behandlungsschritte mittels der Anlage der Stahlindustrie an den Ausgangs- oder Zwischenprodukten vorgenommen werden sollen.

Der erwartete Preis für aus dem Versorgungsnetz bezogene elektrische Energie kann für verschiedene Zeiträume auf jeweils individuell verschiedene Art und Weise festgelegt werden. An einem Spotmarkt steht der Preis oftmals nur für einen relativ begrenzten Zeitraum fest, beispielsweise nur 24 Stunden im Voraus. Hier werden bestimmte Strommengen für feste Zeiträume zu einem jeweiligen Spotmarktpreis gehandelt. Es gibt jedoch auch Verträge mit längerfristigen Bindungen, beispielsweise einen festen Preis für ein bestimmtes Leistungsniveau auf ein Jahr im Voraus. Die beiden Beispiele sind natürlich nicht die einzig möglichen.

Oftmals weicht weiterhin die Abrechnung des tatsächlichen Leistungsbezugs aus dem Versorgungsnetz von einem zuvor vereinbarten Tarif ab, sofern eine andere als die zuvor gekaufte Leistungsmenge bezogen wird. So wird beispielsweise der Strombezug vom Spotmarkt zwar stundenweise gekauft, die Abrechnung erfolgt jedoch viertelstundenweise. Wird die zuvor gekaufte Strommenge bezogen, wird auch der vereinbarte Tarif abgerechnet. Wird hingegen mehr oder weniger Strom bezogen, als zuvor am Spotmarkt gekauft wurde, hängt der tatsächliche Preis für aus dem Versorgungsnetz bezogene elektrische Energie von einer Vielzahl von Faktoren ab. In den tatsächlichen Preis geht insbesondere ein, ob und gegebenenfalls mit welchem Aufwand zusätzlich bezogene elektrische Energie vom Betreiber des Versorgungsnetzes beschafft werden musste oder ob und gegebenenfalls mit welchem Aufwand gekaufte, aber nicht bezogene elektrische Energie von dem Betreiber des Versorgungsnetzes anderweitig verwertet werden konnte. Derartige Sachverhalte bewegen sich außerhalb der Einflusssphäre des Käufers. Bezüglich derartiger Sachverhalte können daher lediglich vernünftige Schätzungen erfolgen. Eine exakte vorherige Berechnung ist hingegen nicht möglich.

Über Zeiträume hinaus, für welche der erwartete Preis für aus dem Versorgungsnetz bezogene elektrische Energie als solcher bekannt ist, können weiterhin aufgrund von Erfahrungswerten gewisse Schätzungen vorgenommen werden.

In jedem Fall besteht die Möglichkeit, dass der erwartete Preis für aus dem Versorgungsnetz bezogene elektrische Energie kein einfacher Skalar ist, sondern ein Vektor, der mehrere Grö-ßen umfasst. Weiterhin besteht stets auch die Möglichkeit, dass der Preis für aus dem Versorgungsnetz bezogene elektrische Energie nicht ein fester, exakt bestimmter Wert ist, sondern eine gewisse Preisspanne abdeckt.

All diese und gegebenenfalls auch weitere Sachverhalte können in den Daten für den Preis für aus dem Versorgungsnetz bezogene elektrische Energie enthalten sein. Weiterhin ist es möglich, dass die Daten, die den Preis für aus dem Versorgungsnetz bezogene elektrische Energie bestimmen, den Preis nur indirekt bestimmen. Ein Beispiel derartiger Daten ist eine Wettervorhersage, da das Ausmaß an Sonnenschein (Stromerzeugung durch Photovoltaik) und das Ausmaß an Wind (Stromerzeugung mittels Windkraftanlagen) direkten Einfluss auf die Menge an erzeugter und damit verfügbarer elektrischer Energie und folglich auf den Preis für aus dem Versorgungsnetz bezogene elektrische Energie haben.

Die Anlagenbetriebsweise für die Anlage der Stahlindustrie ist etwas anderes als der Produktionsplan. Insbesondere definiert die Anlagenbetriebsweise für jeden Zeitpunkt, wie die Anlage der Stahlindustrie betrieben (= gesteuert) wird. Die Anlagenbetriebsweise ist also in zeitlicher Hinsicht kontinuierlich ("um 17:52:43 Uhr wird die Anlage im Ansteuerungszustand A betrieben, um 17:52:44 Uhr im Ansteuerungszustand B, um 17:52:45 Uhr im Ansteuerungszustand C" usw.). Die Anlagenbetriebsweise muss natürlich derart festgelegt sein, dass die Vorgaben des Produktionsplans erfüllt werden.

Die Speicherbetriebsweise für den elektrischen Energiespeicher legt fest, in welchem Ausmaß der elektrische Energiespeicher jeweils geladen und entladen werden soll. Die Speicherbetriebsweise ist analog zur Anlagenbetriebsweise kontinuierlich. Eine aus dem elektrischen Energiespeicher entnommene elektrische Energie kann - natürlich nur temporär - gegebenenfalls sogar so groß sein, dass sie den Energiebedarf der Anlage der Stahlindustrie übersteigt, so dass im Ergebnis elektrische Energie in das Versorgungsnetz eingespeist wird.

Das Variieren der angesetzten Anlagenbetriebsweise und der angesetzten Speicherbetriebsweise mit dem Ziel der Minimierung der Gesamtkosten ist ein typisches Optimierungsproblem. Optimierungsprobleme als solche, die Art und Weise, auf welche Optimierungsprobleme angesetzt werden, und die Art und Weise, auf welche Optimierungsprobleme gelöst werden, ist Fachleuten bekannt. Rein beispielhaft kann auf
- Fletcher, R.: Practical Methods on Optimization. 2nd ed., John Wiley Inc., Cichester, New York 1987,
- Hintermüller, M.; Stadler, G.: A semi-smooth Newton methods for linear-quadratic control problems, Zeitschrift für angewandte Mathematik und Mechanik (ZAMM) 83-4, 219 - 237, (2003) oder
- Ito, K.; Kunisch, K.: Semi-smooth Newton methods for state-constrained optimal control problems, Systems and Control Letters, 50, 221-228, (2003)
verwiesen werden. Aus den genannten Fundstellen ist auch bekannt, auf welche Art und Weise einzuhaltende Randbedingungen und Nebenbedingungen formuliert werden können, beispielsweise Leistungsgrenzen der Anlage der Stahlindustrie und/oder des elektrischen Energiespeichers. Aus der genannten Fundstelle ist weiterhin auch bekannt, auf welche Art und Weise Abweichungen von bevorzugten Betriebszuständen "bestraft" werden können.

Die Kosten für den Bezug elektrischer Energie sind selbsterklärend. Es wird lediglich darauf hingewiesen, dass die Kosten im Einzelfall negativ sein können, nämlich dann, wenn aus dem elektrischen Energiespeicher elektrische Energie in das Versorgungsnetz zurückgespeist wird.

Die Bewertung des erwarteten finalen Anlagenzustands kann durch Verschleiß bedingte Kosten der Anlage der Stahlindustrie umfassen. Weiterhin kann die Bewertung des erwarteten finalen Anlagenzustands einen Anteil umfassen, der beispielsweise unter Verwertung eines energetischen Zustands oder eines Phasenzustands von in der Anlage der Stahlindustrie befindlichen Produkten ermittelt wird.

Die Bewertung des erwarteten finalen Speicherzustands kann durch Verschleiß bedingte Kosten des elektrischen Energiespeichers umfassen. Weiterhin kann die Bewertung des erwarteten finalen Speicherzustands einen Anteil umfassen, der unter Verwertung einer durch die Speicherbetriebsweise bewirkten Degradation des elektrischen Energiespeichers ermittelt wird, also einer Verschlechterung der Leistungsfähigkeit des elektrischen Energiespeichers.

In vielen Fällen ist der Preis für aus dem Versorgungsnetz bezogene elektrische Energie nicht nur von der Zeit abhängig, sondern auch von der Menge, also der aus dem Versorgungsnetz bezogenen Wirkleistung. Weiterhin kann der Preis zusätzlich auch von der bezogenen Blindleistung und/oder von dem Anteil an Oberschwingungen und/oder im Falle von mehrphasigem Bezug elektrischer Energie von dem Anteil an Unsymmetrien zwischen den verschiedenen Phasen abhängen. Die Abhängigkeit von der bezogenen Wirkleistung und/oder der bezogenen Blindleistung kann dadurch gegeben sein, dass bei Überschreiten gewisser Grenzen ein höherermeist erheblich höherer - Preis anfällt. Sofern das Einspeisen elektrischer Energie anders (insbesondere geringer) vergütet wird als der Bezug elektrischer Energie, kann auch dies durch entsprechende Anpassung des erwarteten Preises "als Funktion der bezogenen Wirkleistung" mit abgebildet werden.

Das Betriebsverfahren kann somit dadurch verbessert werden, dass der erwartete Preis für die aus dem Versorgungsnetz bezogene elektrische Energie durch die Daten zusätzlich auch als Funktion der bezogenen Wirkleistung und/oder der bezogenen Blindleistung und/oder von Anteilen an Oberschwingungen und/oder im Falle von mehrphasigem Bezug elektrischer Energie des Anteils an Unsymmetrien zwischen den verschiedenen Phasen bestimmt ist, diese Sachverhalte also bei der Ermittlung der Anlagenbetriebsweise und der Speicherbetriebsweise von der Steuereinrichtung mit berücksichtigt werden können.

Gegebenenfalls kann innerhalb der Steuereinrichtung der Preis für die aus dem Versorgungsnetz bezogene elektrische Energie oberhalb bestimmter Leistungsgrenzen auf unendlich (bzw. einen extrem hohen Wert) gesetzt werden. Dies erzwingt gegebenenfalls das Einhalten dieser Leistungsgrenzen. Alternativ kann das Einhalten von Leistungsgrenzen durch anderweitig zu berücksichtigende Rand- und Nebenbedingungen erreicht und gegebenenfalls auch erzwungen werden.

Eine Anlagenbetriebsweise, die innerhalb des Prädiktionshorizontes nur im Sinne einer Minimierung der Kosten für den Bezug elektrischer Energie aus dem Versorgungsnetz optimal ist, kann zur Folge haben, dass beim späteren Betrieb der Anlage der Stahlindustrie mehr Energie aufgewendet werden muss, als dies unter anderen Umständen der Fall wäre. Aus diesem Grund wird bei der Ermittlung der Gesamtkosten des Gesamtsystems auch die Bewertung des erwarteten finalen Anlagenzustands berücksichtigt. Die Berücksichtigung des Energiebedarfs beim späteren Betrieb der Anlage der Stahlindustrie ist besonders einfach dadurch möglich, dass die Steuereinrichtung die Bewertung des erwarteten finalen Anlagenzustands unter Berücksichtigung einer Energiemenge ermittelt, die beim späteren Betrieb der Anlage der Stahlindustrie über den Prognosehorizont hinaus aufgebracht werden muss. Eine derartige Energiemenge spiegelt sich weder in den Kosten für den Betrieb der Anlage der Stahlindustrie noch in den Kosten für den Bezug der elektrischen Energie und natürlich auch nicht in den Kosten für den sonstigen Betrieb des elektrischen Energiespeichers und der Bewertung des erwarteten finalen Speicherzustands wider. Ein Beispiel für eine derartige Energiemenge sind Energieverluste durch Wärmeabstrahlung, falls aufgrund temporär hoher Energiekosten der Betrieb der Anlage beispielsweise zeitlich gestreckt oder sogar temporär unterbrochen wird. Derartige Energieverluste müssen später zum ordnungsgemäßen Herstellen beispielsweise einer Schmelze wieder ausgeglichen werden.

Vorzugsweise berücksichtigt die Steuereinrichtung bei den Gesamtkosten auch einen Kostenanteil, der durch die Anschaffungskosten der Anlage der Stahlindustrie verursacht wird. Ebenso berücksichtigt die Steuereinrichtung bei den Gesamtkosten vorzugsweise auch einen Kostenanteil, der durch die Anschaffungskosten des elektrischen Energiespeichers verursacht wird. Manchmal sind diese Kostenanteile jedoch Konstanten. Insbesondere in derartigen Fällen können diese Kostenanteile vernachlässigt werden.

Die Aufgabe wird weiterhin durch ein Steuerprogramm mit den Merkmalen des Anspruchs 8 gelöst. Erfindungsgemäß bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 9 gelöst. Erfindungsgemäß ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 10 gelöst. Erfindungsgemäß ist die Steuereinrichtung als erfindungsgemäße Steuereinrichtung ausgebildet, die bei Abarbeitung des Maschinencodes des Steuerprogramms das Gesamtsystem gemäß einem erfindungsgemäßen Betriebsverfahren steuert.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Gesamtsystem,
- FIG 2: eine Anlage der Stahlindustrie,
- FIG 3: ein Ablaufdiagramm und
- FIG 4: ein weiteres Ablaufdiagramm.

### Beschreibung der Ausführungsformen

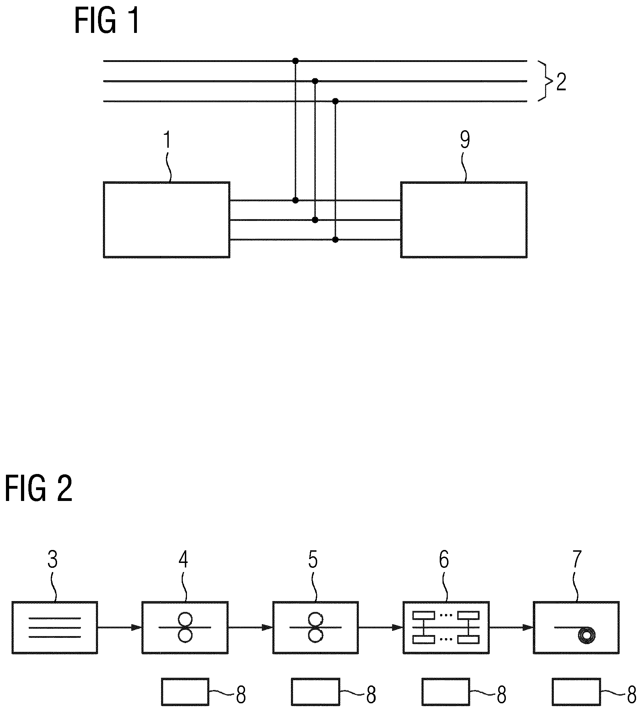

Gemäß FIG 1 umfasst ein Gesamtsystem eine Anlage 1 der Stahlindustrie. Die Anlage 1 verbraucht in ihrem Betrieb (zumindest) elektrische Energie. Die Anlage 1 kann die elektrische Energie aus einem elektrischen Versorgungsnetz 2 beziehen, an das die Anlage 1 angeschlossen ist. Das Versorgungsnetz 2 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.

Die Anlage 1 kann als beliebige Anlage der Stahlindustrie ausgebildet sein. Beispiele derartiger Anlagen sind ein Lichtbogenofen, eine Pfannenanlage und eine Stranggießanlage. Auch kann die Anlage 1 als Walzwerk ausgebildet sein. Auch kann die Anlage 1 als Kombination derartiger Bestandteile ausgebildet sein. FIG 2 zeigt ein Beispiel einer als Walzwerk ausgebildeten Anlage 1 eine Warmbreitbandstraße.

Eine Warmbreitbandstraße umfasst gemäß FIG 2 einen Brammenofen 3, ein Vorwalzwerk 4, ein Fertigwalzwerk 5, eine Kühlstrecke 6 und einen Haspel 7 sowie Hilfsaggregate 8 wie beispielsweise Transporteinrichtungen, Einrichtungen der Wasserwirtschaft (Leitungen, Pumpen und zugehörige Antriebe, Vorratstanks) und der Ölwirtschaft (Hydraulikpumpen und zugehörige Antriebe, beispielsweise für die Anstellung von Walzen von Walzgerüsten der Walzwerke 4, 5). Die Walzwerke 4, 5 können jeweils ein Walzgerüst oder jeweils mehrere Walzgerüste aufweisen und können nach Bedarf reversierend arbeiten oder von Brammen nacheinander durchlaufen werden. Weiterhin weisen die Walzgerüste der Walzwerke 4, 5 elektrische Antriebe auf, die mit elektrischer Energie versorgt werden müssen.

Nachstehend wird manchmal auf die konkrete Ausgestaltung der Anlage 1 gemäß FIG 2 Bezug genommen werden. Es wird jedoch ausdrücklich darauf hingewiesen, dass derartige Bezugnahmen rein beispielhaft sind und das Grundprinzip der vorliegenden Erfindung, wie es allgemein in Verbindung mit einer Anlage 1 der Stahlindustrie realisiert wird, veranschaulichen sollen. Derartige Bezugnahmen sind also nicht beschränkend zu verstehen.

Das Gesamtsystem umfasst gemäß FIG 1 weiterhin einen elektrischen Energiespeicher 9. Der Energiespeicher 9 ist ebenfalls an das Versorgungsnetz 2 angeschlossen. Der Energiespeicher 9 kann alternativ elektrische Energie aufnehmen oder elektrische Energie abgeben. Nimmt der Energiespeicher 9 elektrische Energie auf, wird sie stets aus dem Versorgungsnetz 2 bezogen. Gibt der Energiespeicher 9 elektrische Energie ab, wird er primär zur Deckung des Bedarfs der Anlage 1 und sekundär zur Einspeisung in das Versorgungsnetz 2 verwendet. Im Ergebnis kann somit - je nachdem, ob die vom Energiespeicher 9 abgegebene elektrische Energie grö-ßer oder kleiner als die von der Anlage 1 verbrauchte elektrische Energie ist - temporär Energie in das Versorgungsnetz 2 eingespeist oder aus dem Versorgungsnetz 2 bezogen werden.

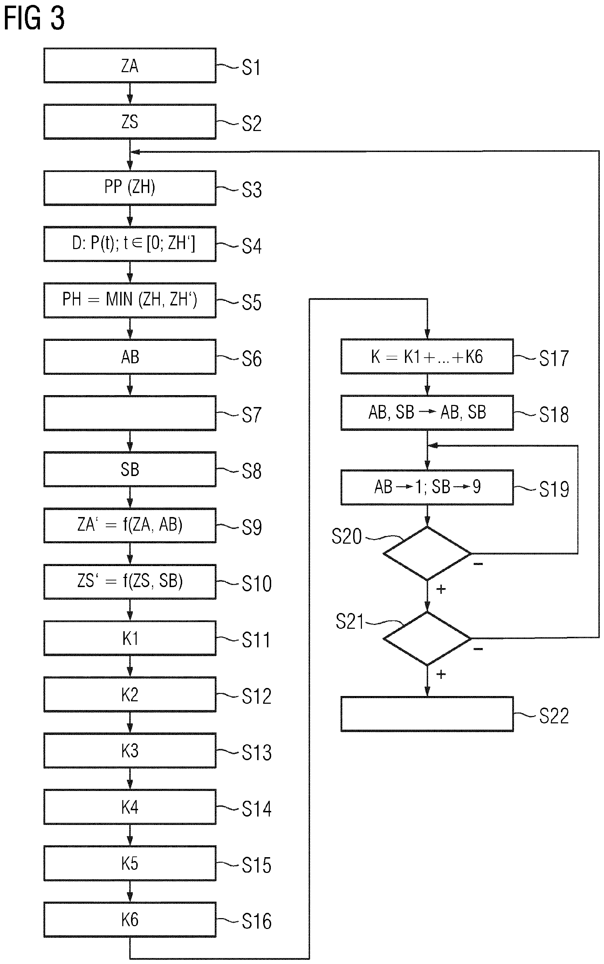

Das Gesamtsystem umfasst weiterhin eine Steuereinrichtung 10. Die Steuereinrichtung 10 ist mit einem Steuerprogramm 11 programmiert. Das Steuerprogramm 11 umfasst Maschinencode 12, der von der Steuereinrichtung 10 abarbeitbar ist. Aufgrund der Programmierung mit dem Steuerprogramm 11 arbeitet die Steuereinrichtung 10 den Maschinencode 12 ab. Die Abarbeitung des Maschinencodes 12 durch die Steuereinrichtung 10 bewirkt, dass die Steuereinrichtung 10 das Gesamtsystem gemäß einem Betriebsverfahren steuert, das nachstehend in Verbindung mit FIG 3 näher erläutert wird. Noch bevor das erfindungsgemäße Betriebsverfahren erläutert wird, wird jedoch darauf hingewiesen, dass die Steuereinrichtung 10 nachstehend zwar als einheitliche Steuereinrichtung 10 erläutert wird, die sowohl die Anlage 1 als auch den Energiespeicher 9 steuert. Die Steuereinrichtung 10 kann jedoch ebenso für die Steuerung der Anlage 1 und für die Steuerung des Energiespeichers 9 jeweils eine eigene Teil-Steuereinrichtung aufweisen. In diesem Fall müssen zwischen den beiden Teil-Steuereinrichtungen ein entsprechender Informationsaustausch und eine entsprechende Abstimmung bzw. Koordination erfolgen.

Gemäß FIG 3 wird der Steuereinrichtung 10 in einem Schritt S1 ein Zustand ZA der Anlage 1 bekannt. Der Zustand ZA umfasst einerseits den Zustand, in dem sich Aggregate der Anlage 1 befinden. Für die Anlage 1 gemäß FIG 2 kann der Zustand ZA beispielsweise folgende Größen umfassen:
- eine Temperatur des Brammenofens 3,
- Verschleißzustände von Arbeitswalzen von Walzgerüsten der Walzwerke 4, 5,
- ob in den Walzgerüsten der Walzwerke 4, 5 gerade Walzstiche ausgeführt werden,
- den "Füllstand" des Haspels 7, also das prozentuale Ausmaß, zu dem eine zu einem Band gewalzte Bramme aufgehaspelt ist.

Der Anlagenzustand ZA kann weiterhin umfassen, welche Materialien sich in welchem Zustand momentan in der Anlage 1 befinden. Für die Anlage 1 gemäß FIG 2 kann der Zustand ZA beispielsweise folgende Größen umfassen:
- eine Belegung des Brammenofens 3 mit Brammen,
- Zeitdauern, für welche die Brammen sich bereits im Brammenofen 3 befinden,
- Temperaturen der Brammen.

Weiterhin wird der Steuereinrichtung 10 in einem Schritt S2 ein Zustand ZS des Energiespeichers 9 bekannt. Der Zustand ZS umfasst zumindest den Ladezustand des Energiespeichers 9, also das Ausmaß, zu dem der Energiespeicher 9 geladen ist. Der Zustand ZS kann auch weitere Größen umfassen, beispielsweise eine Temperatur des Energiespeichers 9 oder einen maximal möglichen oder zulässigen Lade- und Entladestrom. Weiterhin kann der Zustand ZS einen Verschleißzustand des Energiespeichers 9 umfassen.

In einem Schritt S3 wird der Steuereinrichtung 10 ein gewünschter Produktionsplan PP der Anlage 1 bekannt. Beispielsweise kann der Produktionsplan PP der Steuereinrichtung 10 von einer Bedienperson (nicht dargestellt) vorgegeben werden. Der Produktionsplan PP legt fest, welche Endprodukte mittels der Anlage 1 aus welchen Ausgangsmaterialien erzeugt werden sollen und welche Eigenschaften die Endprodukte aufweisen sollen. In der Regel legt der Produktionsplan PP auch fest, welche Zwischenprodukte erzeugt werden sollen und bis wann ein bestimmtes Produkt produziert werden soll. Der Produktionsplan PP erstreckt sich über einen bestimmten Zeithorizont ZH. Der Zeithorizont ZH liegt in aller Regel mindestens bei mehreren Stunden, oftmals sogar im Bereich von mehreren Tagen.

Für die Anlage 1 gemäß FIG 2 kann der Produktionsplan PP beispielsweise umfassen, welche Bramme zu welchem Zeitpunkt gehaspelt sein soll, also bereits aus dem Brammenofen 3 entnommen sein muss, in dem Vorwalzwerk 4 zu einem Vorband vorgewalzt sein muss, in dem Fertigwalzwerk 5 zu einem Band fertiggewalzt sein muss, in der Kühlstrecke 6 gekühlt sein muss und von dem Haspel 7 zu einem Coil gehaspelt sein muss. Der Produktionsplan PP legt für die jeweilige Bramme auch fest, welche Enddicke und sonstigen geometrischen Eigenschaften (Profil, Kontur, Planheit) das fertiggewalzte Band aufweisen soll und welche mechanischen Eigenschaften das Band nach dem Haspeln aufweisen soll, beispielsweise welche Materialfestigkeit, welche Streckgrenze und dergleichen mehr. Der Produktionsplan PP legt für die jeweilige Bramme auch die einzelnen Stichabnahmen bei den einzelnen Walzstichen in den Walzgerüsten der Walzwerke 4, 5 fest.

In einem Schritt S4 werden der Steuereinrichtung 10 Daten D bekannt, durch die mindestens ein erwarteter Preis P für elektrische Energie bestimmt ist, soweit die elektrische Energie aus dem Versorgungsnetz 2 bezogen wird. Der erwartete Preis P ist für einen weiteren Zeithorizont ZH' zumindest als Funktion der Zeit t definiert. Der weitere Zeithorizont ZH' liegt in der Regel bei 24 Stunden. Er kann aber auch größer oder kleiner sein.

Der weitere Zeithorizont ZH' kann gleich dem Zeithorizont ZH sein oder größer oder kleiner als der Zeithorizont ZH sein. Die Steuereinrichtung 10 definiert daher in einem Schritt S5 einen Prognosehorizont PH. Der Prognosehorizont PH ist definiert als das Minimum der beiden Zeithorizonte ZH, ZH'. Aufgrund des Umstands, dass der Prognosehorizont PH das Minimum der beiden Zeithorizonte ZH, ZH' ist, ist der Steuereinrichtung 10 aufgrund der Schritte S3 und S4 für den Prognosehorizont PH somit sowohl der Produktionsplan PP als auch der erwartete Preis P für elektrische Energie bekannt.

In einem Schritt S6 setzt die Steuereinrichtung 10 für den Prognosehorizont PH eine Anlagenbetriebsweise AB für die Anlage 1 an. Die Anlagenbetriebsweise AB definiert für jeden Zeitpunkt, wie die Anlage 1 betrieben (= gesteuert) wird. Die Anlagenbetriebsweise AB wird von der Steuereinrichtung 10 derart festgelegt, dass die Vorgaben des Produktionsplans PP erfüllt werden. Für die Anlage 1 gemäß FIG 2 kann die Anlagenbetriebsweise AB beispielsweise umfassen:
- die elektrische Heizleistung des Brammenofens 3,
- die exakten Zeitpunkte, zu denen eine Bramme aus dem Brammenofen 3 entnommen wird, in dem Vorwalzwerk 4 und dem Fertigwalzwerk 5 gewalzt wird, in der Kühlstrecke 6 gekühlt wird und mittels des Haspels 7 gehaspelt wird,
- die zugehörigen erforderlichen Walzkräfte und Walzmomente der Walzgerüste,
- die Walzgeschwindigkeiten,
- die erforderlichen Leistungen für die elektrischen Antriebe der Walzgerüste,
- die Leistungsanforderungen der Hilfsaggregate 8.

Die genannten Größen können sekundengenau zeitaufgelöst sein.

Aufgrund der angesetzten Anlagenbetriebsweise AB kann die Steuereinrichtung 10 somit in einem Schritt S7 mit derselben Zeitauflösung den Bedarf der Anlage 1 an elektrischer Energie ermitteln. Für die Ermittlung des Energiebedarfs der Anlage 1 sind aber auch gröbere Auflösungen möglich. Auch ist es möglich, zwar zunächst mit einer hohen zeitlichen Auflösung zu arbeiten, beispielsweise sekundengenau, hierauf aufbauend jedoch für größere Zeiträume (beispielsweise 1 Minute, 5 Minuten, 15 Minuten) statistische Auswertungen vorzunehmen, beispielsweise Mittelwerte, maximale Werte, minimale Werte, Streuungen usw. zu ermitteln.

Weiterhin setzt die Steuereinrichtung 10 in einem Schritt S8 für den Prognosehorizont PH eine Speicherbetriebsweise SB für den Energiespeicher 9 an. Die Speicherbetriebsweise SB legt insbesondere mit der gleichen oder zumindest in etwa gleichen Zeitauflösung fest, wie der Energiespeicher 9 betrieben wird, also in welchem Umfang elektrische Energie dem Energiespeicher 9 entnommen bzw. dem Energiespeicher 9 zugeführt wird. Auch hier können, aufbauend auf einer hohen zeitlichen Auflösung für größere Zeiträume statistische Auswertungen vorgenommen werden.

Die beiden angesetzten Betriebsweisen AB, SB sind vorerst nur vorläufig.

In einem Schritt S9 ermittelt die Steuereinrichtung 10 für das Ende des Prognosehorizonts PH einen erwarteten finalen Anlagenzustand ZA'. Die Steuereinrichtung 10 verwertet bei der Ermittlung des erwarteten finalen Anlagenzustands ZA' den aktuellen Anlagenzustand ZA und die angesetzte Anlagenbetriebsweise AB. Insbesondere geht die Steuereinrichtung 10 bei der Ausführung des Schrittes S9 von dem aktuellen Anlagenzustand ZA aus und ermittelt den erwarteten finalen Anlagenzustand ZA' durch Fortschreibung entsprechend der angesetzten Anlagenbetriebsweise AB.

Ebenso ermittelt die Steuereinrichtung 10 in einem Schritt S10 für das Ende des Prognosehorizonts PH einen erwarteten finalen Speicherzustand ZS'. Die Steuereinrichtung 10 verwertet bei der Ermittlung des erwarteten finalen Speicherzustands ZS' den aktuellen Speicherzustand ZS und die angesetzte Speicherbetriebsweise SB. Insbesondere geht die Steuereinrichtung 10 bei der Ausführung des Schrittes S10 von dem aktuellen Speicherzustand ZS aus und ermittelt den erwarteten finalen Speicherzustand ZS' durch Fortschreibung entsprechend der angesetzten Speicherbetriebsweise SB.

In Schritten S11 bis S16 ermittelt die Steuereinrichtung 10 Kostenfaktoren K1 bis K6. Die Kostenfaktoren K1, K2 und K3 werden stets ermittelt. Die Ermittlung der Kostenfaktoren K4, K5 und K6 ist optional.

Der Kostenfaktor K1 steht für die Kosten, die sich - soweit vorhersehbar - für den betrachteten Prognosehorizont PH aufgrund des Bezuges an elektrischer Energie aus dem Versorgungsnetz 2 ergeben. Zur Ermittlung des Kostenfaktors K1 ermittelt die Steuereinrichtung 10 anhand des im Schritt S7 ermittelten Energiebedarfs und der im Schritt S8 angesetzten Speicherbetriebsweise SB jeweils den resultierenden Bezug an elektrischer Energie und hierauf aufbauend in Verbindung mit dem aus dem Schritt S4 bekannten Preis für den Bezug der elektrischen Energie die resultierenden Kosten.

Der Kostenfaktor K2 steht für eine Bewertung des erwarteten finalen Anlagenzustands ZA'. Beispielsweise kann der durch den Betrieb der Anlage 1 angefallene Verschleiß berücksichtigt werden, also die Kosten durch den Verschleiß, der während des Produktionshorizonts PH aufgrund der Anlagenbetriebsweise AB auftritt. Die Berücksichtigung dieser Kosten erfordert natürlich, dass die Steuereinrichtung 10 nicht nur den durch die Anlagenbetriebsweise AB hervorgerufenen Verschleiß ermittelt, sondern auch den Verschleiß mit entsprechenden Kosten bewertet.

Weiterhin kann die Bewertung des erwarteten finalen Anlagenzustands ZA' einen Anteil umfassen, der beispielsweise unter Verwertung eines energetischen Zustands der Anlage 1 - dies umfasst auch den energetischen Zustand von in der Anlage 1 befindlichen Produkten - ermittelt wird. Dadurch ist die Steuereinrichtung 10 in der Lage, die Bewertung des erwarteten finalen Anlagenzustands ZA' unter Berücksichtigung einer Energiemenge zu ermitteln, die beim späteren Betrieb der Anlage 1 über den Prognosehorizont PH hinaus aufgebracht werden muss.

Bei einer Warmbreitbandstraße kann beispielsweise berücksichtigt werden, dass im Brammenofen 3 befindliche Brammen noch nicht vollständig aufgeheizt sind, für das vollständige Aufheizen also noch später (= nach Ablauf des Prognosehorizonts PH) eine bestimmte Energiemenge erforderlich ist. Alternativ oder zusätzlich kann berücksichtigt werden, dass Brammen den Walzwerken 4, 5 aufgrund einer nicht vollständigen Aufheizung im Brammenofen 3 später mit einer niedrigeren Temperatur zugeführt werden. Aufgrund der niedrigeren Temperatur sind beim Walzen höhere Walzkräfte und Walzmomente und damit ein höherer Energiebedarf erforderlich. Auch der Verschleiß der Arbeitswalzen der Walzgerüste der Walzwerke 4, 5 und die hierdurch hervorgerufenen Kosten können in einem derartigen Fall größer sein. Bei einem Lichtbogenofen kann beispielsweise berücksichtigt werden, dass eine Schmelze zwar innerhalb eines zulässigen Zeitfensters zur Verfügung steht, aufgrund der Art und Weise der Aufheizung jedoch später überproportional mehr Energie erforderlich ist, um die Schmelze auf ihre Zieltemperatur aufzuheizen.

Der Kostenfaktor K3 steht für eine Bewertung des finalen Speicherzustands ZS'. Beispielsweise kann der durch den Betrieb des Energiespeichers 9 angefallene Verschleiß berücksichtigt werden, also die Kosten durch den Verschleiß, der während des Produktionshorizonts PH aufgrund der Speicherbetriebsweise SB auftritt. Die Berücksichtigung der durch Verschleiß bedingten Kosten erfordert natürlich, dass die Steuereinrichtung 10 nicht nur den durch die Speicherbetriebsweise SB hervorgerufenen Verschleiß ermittelt, sondern auch den Verschleiß mit entsprechenden Kosten bewertet.

Der Kostenfaktor K4 steht für die Kosten für den sonstigen Betrieb der Anlage 1, also die Kosten, die sich für den betrachteten Prognosehorizont PH ergeben, aber ohne Berücksichtigung der Kosten für die elektrische Energie. Die Kosten für den sonstigen Betrieb der Anlage 1 umfassen die normalen Betriebskosten der Anlage 1 mit Ausnahme der Kosten der elektrischen Energie. Die Kosten für den sonstigen Betrieb der Anlage 1 umfassen beispielsweise die Kosten für benötigte Einsatzstoffe wie Ausgangsmaterialien und Prozessmedien oder die Aufbereitung von Prozessmedien oder Umweltbelastungen.

Der Kostenfaktor K4 kann weiterhin Abschreibungen umfassen. In diesem Fall berücksichtigt die Steuereinrichtung 10 bei den Gesamtkosten K auch Kostenanteile, die durch die Anschaffungskosten der Anlage 1 verursacht werden. Hingegen können die Kosten für den sonstigen Betrieb der Anlage 1 nicht die durch Verschleiß bedingten Kosten umfassen. Denn diese Kosten sind bereits in der Bewertung der Anlage 1 am Ende des Prognosehorizonts PH enthalten.

Der Kostenfaktor K5 steht für Kosten, die sich für den betrachteten Prognosehorizont PH für den sonstigen Betrieb des Energiespeichers 9 ergeben, sofern derartige Kosten anfallen. In dem Kostenfaktor K5 werden jedoch die Kosten für den Bezug an elektrischer Energie aus dem Versorgungsnetz 2 nicht berücksichtigt.

Die Kosten für den sonstigen Betrieb des Energiespeichers 9 können insbesondere Abschreibungen umfassen. In diesem Fall berücksichtigt die Steuereinrichtung 10 bei den Gesamtkosten K auch Kostenanteile berücksichtigt, die durch die Anschaffungskosten des Energiespeichers 9 verursacht werden.

Hingegen können die Kosten für den sonstigen Betrieb des Energiespeichers 9 nicht die durch Verschleiß bedingten Kosten umfassen. Denn diese Kosten sind bereits in der Bewertung des Energiespeichers 9 des Energiespeichers am Ende des Prognosehorizonts PH enthalten.

Der Kostenfaktor K6 berücksichtigt andere Kosten des Gesamtsystems, sofern derartige Kosten anfallen.

In einem Schritt S17 ermittelt die Steuereinrichtung 10 durch Bildung der Summe der Kostenfaktoren K1 bis K6 die Gesamtkosten K, die innerhalb des Prognosehorizonts PH beim Betrieb des Gesamtsystems anfallen.

In einem Schritt S18 löst die Steuereinrichtung 10 ein Optimierungsproblem. Die Lösung des Optimierungsproblems ist die Kombination derjenigen Anlagenbetriebsweise AB und derjenigen Speicherbetriebsweise SB, bei denen die Gesamtkosten K für den Betrieb des Gesamtsystems innerhalb des Prognosehorizonts PH minimal sind. Im Rahmen des Lösen des Optimierungsproblems variiert die Steuereinrichtung 10 für den Prognosehorizont PH die angesetzte Anlagenbetriebsweise AB und die angesetzte Speicherbetriebsweise SB. Auch der erwartete finale Anlagenzustand ZA' und der erwartete finale Speicherzustand ZS' werden entsprechend nachgeführt und somit ebenfalls variiert.

Optimierungsprobleme als solche, deren Ansatz und Vorgehensweisen zum Lösen derartiger Optimierungsprobleme sind Fachleuten bekannt. Sie werden auch im eingangs genannten Stand der Technik vom Ansatz her so ergriffen.

Beim Variieren der Betriebsweisen AB, SB berücksichtigt die Steuereinrichtung 10 selbstverständlich, dass der Produktionsplan PP weiterhin eingehalten wird. Auch andere Bedingungen kann die Steuereinrichtung 10 berücksichtigen. Beispiele derartiger Bedingungen können beispielsweise Leistungsgrenzen der Anlage 1 und des Energiespeichers 9 sein, beispielsweise für den Energiespeicher 9 ein minimal zulässiger und ein maximal zulässiger Ladezustand, ein maximal zulässiger Ladestrom und ein maximal zulässiger Entladestrom. Auch andere Bedingungen sind möglich, beispielsweise gewisse Vorgaben für die erwarteten finalen Zustände ZA', ZS', dass keine Energie in das Versorgungsnetz 2 eingespeist wird, dass die aus dem Versorgungsnetz 2 bezogene Energie einen vorgegebenen Maximalwert nicht übersteigt oder dass die Produktion bestimmter Produkte zu einem vorgegebenen Zeitpunkt abgeschlossen ist. Der erwartete finale Zustand ZS' für den Energiespeicher 9 kann beispielsweise - sei es als punktuelle Wert, sei es als Rahmenvorgabe - einen Ladezustand des Energiespeichers 9 umfassen, der am Ende des Prognosehorizonts PH erfüllt sein muss.

Der wesentliche Unterschied zwischen den Vorgehensweisen des Standes der Technik und der vorliegenden Erfindung ist, dass im Stand der Technik meist nur der Kostenfaktor K1 berücksichtigt wird, also die Kosten, die sich für den betrachteten Prognosehorizont PH aufgrund des Bezuges an elektrischer Energie aus dem Versorgungsnetz 2 ergeben. Manchmal wird auch noch der Kostenfaktor K4 berücksichtigt, also die Kosten, die sich für den betrachteten Prognosehorizont PH für den sonstigen Betrieb der Anlage 1, aber ohne Berücksichtigung der Kosten für die elektrische Energie ergeben. Im Rahmen der vorliegenden Erfindung hingegen erfolgt mit dem Kostenfaktor K3 auch eine Bewertung des finalen Speicherzustands ZS'. Vor allem aber erfolgt mit dem Kostenfaktor K2 eine Bewertung des finalen Anlagenzustands ZA'.

Die Kostenfaktoren K1, K2 und K3 müssen im Rahmen der vorliegenden Erfindung bei den Gesamtkosten K also zwingend berücksichtigt werden. Die Berücksichtigung der Kostenfaktoren K4, K5 und eventuell auch K6 ist zwar von Vorteil, aber nicht zwingend erforderlich.

Mit der Ausführung des Schrittes S18 stehen die variierte und dadurch optimierte Anlagenbetriebsweise AB und die variierte und dadurch optimierte Speicherbetriebsweise SB fest. Die Steuereinrichtung 10 kann daher in einem Schritt S19 die Anlage 1 gemäß der variierten Anlagenbetriebsweise AB und den Energiespeicher 9 gemäß der variierten Speicherbetriebsweise SB betreiben. Die Steuereinrichtung 10 betreibt somit die Anlage 1 und den Energiespeicher 9 für den jeweiligen Zeitpunkt t entsprechend den beiden Betriebsweisen AB, SB. Dies erfolgt zunächst für den Beginn des Prognosehorizonts PH.

In einem Schritt S20 prüft die Steuereinrichtung 10, ob ihr neue Informationen zur Verfügung stehen. Wenn dies nicht der Fall ist, geht die Steuereinrichtung 10 zum Schritt S19 zurück. Bei der erneuten Ausführung des Schrittes S19 betreibt die Steuereinrichtung 10 die Anlage 1 und den Energiespeicher 9 weiterhin entsprechend den beiden Betriebsweisen AB, SB. Sie berücksichtigt dabei den Fortschritt in der Zeit t.

Wenn der Steuereinrichtung 10 neue Informationen zur Verfügung stehen, geht die Steuereinrichtung 10 zu einem Schritt S21 über. Im Schritt S21 prüft die Steuereinrichtung 10, ob die Information ein Befehl zum Beenden des Betriebs des Gesamtsystems ist. Wenn dies der Fall ist, beendet die Steuereinrichtung 10 in einem Schritt S22 den Betrieb des Gesamtsystems. Anderenfalls geht die Steuereinrichtung 10 zum Schritt S3 zurück. Je nach Art der neuen Informationen kann die Steuereinrichtung 10 alternativ auch zum Schritt S4 zurückgehen.

Im Ergebnis wird durch die Vorgehensweise gemäß FIG 3 die Ermittlung der Anlagenbetriebsweise AB und der Speicherbetriebsweise SB immer wieder mit einem bestimmten Prognosehorizont PH wiederholt. Die Ermittlung wird also im Sinne einer permanenten Vorhersage ausgeführt und laufend an den erwarteten Preis P und den Produktionsplan PP angepasst.

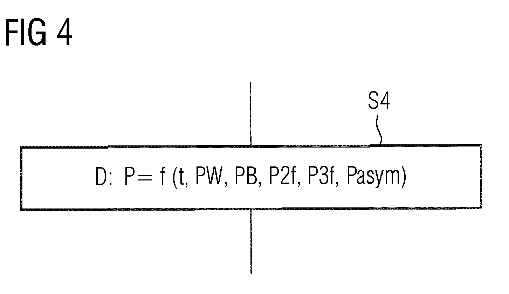

Im einfachsten Fall ist der erwartete Preis P für die aus dem Versorgungsnetz 2 bezogene elektrische Energie ausschließlich eine Funktion der Zeit t. In vielen Fällen ist der erwartete Preis P jedoch entsprechend der Darstellung in FIG 4, die eine mögliche Ausgestaltung des Schrittes S4 zeigt, nicht nur eine Funktion der Zeit t, sondern auch weiterer Größen. Die weiteren Größen können beispielsweise sein:
- die bezogene Wirkleistung PW als solche; insbesondere kann der erwartete Preis P bei der Überschreitung bestimmter Leistungsgrenzen sprungartig ansteigen (Spitzenlaststrom ist teuer);
- die bezogene Blindleistung PB; Blindleistung PB belastet das Versorgungsnetz 2, ohne dass sie zur Wirkleistung PW beiträgt;
- der Anteile P2f, P3f usw. an Oberschwingungen in der bezogenen elektrischen Energie, also der Energieanteil mit der doppelten Frequenz (P2f) oder der dreifachen Frequenz (P3f) usw. in der bezogenen elektrischen Energie; Oberschwingungen können Störungen in anderen Verbrauchern hervorrufen und auch von Menschen unangenehm empfunden werden (Stichwort "Flicker");
- der Anteil Pasym an Unsymmetrien zwischen den verschiedenen Phasen des Versorgungsnetzes 2; Unsymmetrien können zwar nur im Falle eines mehrphasigen Bezugs von elektrischer Energie auftreten, genau ein derartiger mehrphasiger Bezug ist jedoch in aller Regel gegeben.

Sofern die Steuereinrichtung 10 Kostenanteile für die Anschaffung der Anlage 1 und/oder des Energiespeichers 9 berücksichtigt, sind diese Kostenanteile in vielen Fällen Konstanten. Dann hat ihre Berücksichtigung, auch wenn sie möglich ist, keinen Einfluss auf das Ergebnis der Optimierung, also die optimierte Anlagenbetriebsweise AB und die optimierte Speicherbetriebsweise SB.

Die vorliegende Erfindung weist viele Vorteile auf. Der größte Vorteil besteht darin, dass durch die Berücksichtigung des erwarteten finalen Anlagenzustands ZA' auch Folgen der Optimierung berücksichtigt werden können, die über den Prognosehorizont PH hinausgehen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Anlage
- 2: Versorgungsnetz
- 3: Brammenofen
- 4: Vorwalzwerk
- 5: Fertigwalzwerk
- 6: Kühlstrecke
- 7: Haspel
- 8: Hilfsaggregate
- 9: Energiespeicher
- 10: Steuereinrichtung
- 11: Steuerprogramm
- 12: Maschinencode

- AB: Anlagenbetriebsweise
- D: Daten
- K: Gesamtkosten
- K1 bis K6: Kostenfaktoren
- P: Preis
- P2f, P3f: Anteile an Oberschwingungen
- Pasym: Anteil an Unsymmetrien
- PB: Blindleistung
- PH: Prognosehorizont
- PP: Produktionsplan
- PW: Wirkleistung
- S1 bis S22: Schritte
- SB: Speicherbetriebsweise
- t: Zeit
- ZA, ZA': Anlagenzustände
- ZH, ZH': Zeithorizonte
- ZS, ZS': Speicherzustände

## Patentansprüche

1. Betriebsverfahren für ein Gesamtsystem, das eine elektrische Energie verbrauchende Anlage (1) der Stahlindustrie und einen elektrischen Energiespeicher (9) umfasst, die beide an ein elektrisches Versorgungsnetz (2) angeschlossen sind,
- wobei einer das Gesamtsystem steuernden Steuereinrichtung (10) ein aktueller Anlagenzustand (ZA) der Anlage (1) der Stahlindustrie, ein aktueller Speicherzustand (ZS) des Energiespeichers (9) und für einen Prognosehorizont (PH) ein gewünschter Produktionsplan (PP) der Anlage (1) der Stahlindustrie bekannt sind,
- wobei der Steuereinrichtung (10) Daten (D) bekannt sind, durch die für den Prognosehorizont (PH) mindestens ein erwarteter Preis (P) für aus dem Versorgungsnetz (2) bezogene elektrische Energie zumindest als Funktion der Zeit (t) bestimmt ist,
- wobei die Steuereinrichtung (10) für den Prognosehorizont (PH) eine Anlagenbetriebsweise (AB) für die Anlage (1) der Stahlindustrie und eine Speicherbetriebsweise (SB) für den elektrischen Energiespeicher (9) ansetzt und für das Ende des Prognosehorizonts (PH) unter Verwertung des aktuellen Anlagenzustands (ZA) und der angesetzten Anlagenbetriebsweise (AB) einen erwarteten finalen Anlagenzustand (ZA') sowie unter Verwertung des aktuellen Speicherzustands (ZS) und der angesetzten Speicherbetriebsweise (SB) einen erwarteten finalen Speicherzustand (ZS') ermittelt,
- wobei die Steuereinrichtung (10) für den Prognosehorizont (PH) die angesetzte Anlagenbetriebsweise (AB) und die angesetzte Speicherbetriebsweise (SB) und hierauf aufbauend den erwarteten finalen Anlagenzustand (ZA') und den erwarteten finalen Speicherzustand (ZS') variiert, so dass die Gesamtkosten (K) für den Betrieb des Gesamtsystems minimiert werden, wobei in die Gesamtkosten (K) die Kosten (K1) für den Bezug elektrischer Energie aus dem Versorgungsnetz (2), eine Bewertung (K2) des erwarteten finalen Anlagenzustands (ZA') und eine Bewertung (K3) des erwarteten finalen Speicherzustands (ZS') eingehen, und
- wobei die Steuereinrichtung (10) zumindest für den Beginn des Prognosehorizonts (PH) die Anlage (1) der Stahlindustrie gemäß der variierten Anlagenbetriebsweise (AB) und den elektrischen Energiespeicher (9) gemäß der variierten Speicherbetriebsweise (SB) betreibt.

2. Betriebsverfahren nach Anspruch 1,
**dadurch gekennzeichnet,**
**dass** der erwartete Preis (P) für die aus dem Versorgungsnetz (2) bezogene elektrische Energie durch die Daten (D) zusätzlich auch als Funktion der bezogenen Wirkleistung (PW) und/oder der bezogenen Blindleistung (PB) und/oder von Anteilen (P2f, P3f) an Oberschwingungen und/oder im Falle von mehrphasigem Bezug elektrischer Energie des Anteils (Pasym) an Unsymmetrien zwischen den verschiedenen Phasen bestimmt ist.

3. Betriebsverfahren nach Anspruch 1 oder 2,
**dadurch gekennzeichnet,**
**dass** die Steuereinrichtung (10) die Bewertung (K2) des erwarteten finalen Anlagenzustands (ZA') unter Berücksichtigung einer Energiemenge ermittelt, die beim späteren Betrieb der Anlage (1) der Stahlindustrie über den Prognosehorizont (PH) hinaus aufgebracht werden muss.

4. Betriebsverfahren nach Anspruch 1, 2 oder 3,
**dadurch gekennzeichnet,**
**dass** die Steuereinrichtung (10) bei der Bewertung des erwarteten finalen Anlagenzustands (ZA') auch einen Kostenanteil berücksichtigt, der durch den durch den Betrieb der Anlage (1) der Stahlindustrie während des Produktionshorizonts (PH) hervorgerufenen Verschleiß verursacht wird.

5. Betriebsverfahren nach einem der obigen Ansprüche,
**dadurch gekennzeichnet,**
**dass** die Steuereinrichtung (10) bei der Bewertung des erwarteten finalen Speicherzustands (ZS') auch einen Kostenanteil berücksichtigt, der durch den durch den Betrieb des elektrischen Energiespeichers (9) während des Produktionshorizonts (PH) hervorgerufenen Verschleiß verursacht wird.

6. Betriebsverfahren nach einem der obigen Ansprüche,
**dadurch gekennzeichnet,**
**dass** die Steuereinrichtung (10) bei den Gesamtkosten (K) auch einen Kostenanteil berücksichtigt, der durch die Anschaffungskosten der Anlage (1) der Stahlindustrie verursacht wird.

7. Betriebsverfahren nach einem der obigen Ansprüche,
**dadurch gekennzeichnet,**
**dass** die Steuereinrichtung (10) bei den Gesamtkosten (K) auch einen Kostenanteil berücksichtigt, der durch die Anschaffungskosten des elektrischen Energiespeichers (9) verursacht wird.

8. Steuerprogramm für eine Steuereinrichtung (10) für ein Gesamtsystem, das eine elektrische Energie verbrauchende Anlage (1) der Stahlindustrie und einen elektrischen Energiespeicher (9) umfasst, die beide an ein elektrisches Versorgungsnetz (2) angeschlossen sind, wobei das Steuerprogramm Maschinencode (12) umfasst, der von der Steuereinrichtung (10) abarbeitbar ist, wobei die Abarbeitung des Maschinencodes (12) durch die Steuereinrichtung (10) bewirkt, dass die Steuereinrichtung (10) das Gesamtsystem gemäß einem Betriebsverfahren nach einem der obigen Ansprüche steuert.

9. Steuereinrichtung für ein Gesamtsystem, das eine elektrische Energie verbrauchende Anlage (1) der Stahlindustrie und einen elektrischen Energiespeicher (9) umfasst, die beide an ein elektrisches Versorgungsnetz (2) angeschlossen sind, wobei die Steuereinrichtung mit einem Steuerprogramm (11) nach Anspruch 8 programmiert ist, so dass die Steuereinrichtung bei Abarbeitung des Maschinencodes (12) des Steuerprogramms (11) das Gesamtsystem gemäß einem Betriebsverfahren nach einem der Ansprüche 1 bis 7 steuert.

10. Gesamtsystem,
- wobei das Gesamtsystem eine elektrische Energie verbrauchende Anlage (1) der Stahlindustrie und einen elektrischen Energiespeicher (9) umfasst, die beide an ein elektrisches Versorgungsnetz (2) angeschlossen sind,
- wobei das Gesamtsystem eine Steuereinrichtung (10) nach Anspruch 9 umfasst, die bei Abarbeitung des Maschinencodes (12) des Steuerprogramms (11) von Anspruch 8 das Gesamtsystem gemäß einem Betriebsverfahren nach einem der Ansprüche 1 bis 7 steuert.
